# EUROPÄISCHE PATENTSCHRIFT

(11) **EP 2 667 065 B1**
(45) Veröffentlichungstag und Bekanntmachung des Hinweises auf die Patenterteilung: **10.12.2014**
(21) Anmeldenummer: 13163663.1
(22) Anmeldetag: 15.04.2013
(51) Int. Cl.: F16K 3/18, F16K 3/14

(54) **Schieberarmatur**
Gate valve
Armature coulissante

(30) Priorität: 26.05.2012 DE 102012010466
(43) Veröffentlichungstag der Anmeldung: 27.11.2013
(73) Patentinhaber: VAG-Armaturen GmbH, 68305 Mannheim (DE)
(72) Erfinder: Falesnik, Miroslav, 69663 Hroznova Lhota (CZ)
(74) Vertreter: Charrier, Rapp & Liebau

(56) Entgegenhaltungen:
- WO-A1-2005/064236
- DD-A5- 60 190
- DE-A1- 4 320 185
- DE-U1- 29 703 184
- JP-A- H11 201 319

## Beschreibung

Die Erfindung betrifft eine Schieberarmatur nach dem Oberbegriff des Anspruchs 1.

Eine derartige Schieberarmatur ist aus der DE 43 20 185 A1 bekannt. Dort ist eine Schieberplatte innerhalb eines vor einer Auslassöffnung an einer Wand montierbaren Gestellrahmens verschiebbar geführt. Im Bereich eines Durchlasses in einer Wandplatte des Gestellrahmens ist eine Dichtungsanordnung mit zwei auf jeder Seite eines Dichtungsrings angeordneten Ringdichtungen vorgesehen. Über eine Keilanordnung mit mehreren an der Schieberplatte und dem Gestellrahmen angeordneten Keilstücken wird die Schieberplatte quer zu deren Bewegungsrichtung an die Dichtungsanordnung angedrückt, wenn die Schieberplatte in eine den Durchlass abdeckende Schließstellung gelangt.

Bei derartigen Schieberarmaturen mit Keilsystem wird die Schieberplatte fast während des gesamten Hubs mit einem Spiel innerhalb des Gestellrahmens verschoben. Erst am Ende des Schließhubes wird die Keilung der an der Schieberplatte und dem Gestellrahmen jeweils fest angeordneten Keilstücke wirksam, so dass die Schieberplatte erst kurz vor der vollständigen Absperrung an die Dichtung angedrückt wird. Dadurch kann die Reibung und die Betätigungskraft verringert und der Verschleiß reduziert werden. Allerdings hebt die Schieberplatte beim Öffnen relativ schnell von der Dichtung ab, so dass auch schnell eine Leckage an der gesamten Schieberplatte auftritt. Da die an der Schieberplatte und dem Gestellrahmen fixierten Keilstücke bei der Hubbewegung kollisionsfrei aneinander vorbeigeführt werden müssen, ist außerdem eine seitliche Versetzung der Keilstücke erforderlich. Gerade bei größeren Schieberabmessungen mit mehreren übereinander angeordneten Keilstücken müssen daher auch die Seitenprofile des Gestellrahmens eine entsprechende Breite und Stabilität aufweisen. Dadurch werden jedoch der Materialeinsatz und die Baugröße erhöht.

Es sind daher auch bereits Schieberarmaturen bekannt, bei denen die Schieberplatte mittels in der Regel aus Kunststoff bestehender Gleitprofile nahezu spielfrei in profilierten Rahmenprofilen geführt ist und definiert an das jeweilige Dichtprofil angepresst wird. Bei einem solchen Aufbau wird nur die tatsächliche Schieberöffnung freigegeben, während die Bereiche, an denen Schieberplatte und Dichtung in Kontakt stehen, dicht sind. Außerdem wird die Schieberplatte während des gesamten Hubs spielfrei geführt, wodurch Vibrationen während des Betriebs vermieden werden können. Da jedoch die Schieberplatte während des gesamten Hubs mit der Dichtung verpresst ist, werden entsprechend höhere Betätigungskräfte für die Bewegung der Schieberplatte benötigt. Wegen der stetigen Verpressung der Schieberplatte mit der Dichtung wird auch die Reibung bei der Betätigung und dadurch auch der Verschleiß der Dichtung erhöht. Bei auftretender Undichtigkeit kann außerdem die Dichtkraft nicht weiter erhöht werden.

Aufgabe der Erfindung ist es, eine Schieberarmatur zu schaffen, die auch bei kompakter und platzsparender Bauweise eine möglichst reibungsarme Betätigung mit reduzierter Betätigungskraft ermöglicht.

Diese Aufgabe wird durch eine Schieberarmatur mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Schieberarmatur sind nur die an der Schieberplatte angeordneten Keilelemente fest mit der Schieberplatte verbunden, während die dazugehörigen zweiten Keilelemente relativ zu der Aufnahme verschiebbar an der Aufnahme abgestützt sind und bei einer Verschiebung der Schieberplatte mitgenommen werden. Dadurch können mehrere Keilelemente in Verschieberichtung in Linie hintereinander angeordnet werden und müssen nicht seitlich zueinander versetzt sein. Somit können auch größere Schieber auf der gesamten Länge in relativ schmalen Seitenprofilen geführt werden. Die Gesamtkonstruktion und insbesondere die Seitenführungen mit den Keilelementen zur Verpressung der Schieberplatte mit der Dichtung können dadurch äußert kompakt und platzsparend ausgeführt werden. Die in Verschieberichtung der Schieberplatte in Linie hintereinander angeordneten zweiten Keilelemente sind an einer gemeinsamen Gleitschiene angeordnet. Dadurch können die zweiten Keilelemente gemeinsam verschoben werden. Die zweiten Keilelemente können z.B. in Aussparungen innerhalb der Gleitschiene eingesetzt sein.

In einer besonders vorteilhaften Ausfiihrung ist die Aufnahme in Form eines Rahmens mit zwei als Rahmenprofilen ausgebildeten Seitenprofilen zur Führung der Schieberplatte an ihren beiden Längsseiten ausgeführt. Die Seitenprofile können aufgrund des nicht erforderlichen seitlichen Versatzes der Keilelemente äußerst kompakt und biegesteif ausgeführt sein.

Die Gleitschiene weist zweckmäßigerweise mindestens eine Anschlagfläche zur Mitnahme der Gleitschiene durch ein erstes Keilelement bei der Verschiebung der Schieberplatte in eine Offenstellung auf. Dadurch können die zweiten Keilelemente bei einer Verschiebung der Schieberplatte in eine Öffnungsstellung durch die ersten Keilelemente über die Gleitschiene mitgenommen werden.

In einer weiteren vorteilhaften Ausführungsform können die zweiten Keilelemente hochgezogene Seitenwände enthalten. Dadurch können die ersten Keilelemente innerhalb der zweiten Keilelemente seitlich geführt sein.

Auf besonders vorteilhafte Weise ist die Schieberplatte innerhalb der Seitenprofile der als Rahmen ausgebildeten Aufnahme durch das zweite Keilelement und ein an der Schieberplatte angeordnetes Führungselement verschiebbar geführt. Durch diese beiden Teile kann eine Gleitlagerfunktion mit geringem Spiel und einer definierten Mindestpressung zwischen Schieberplatte und Dichtung über den gesamten Hub gewährleistet werden. Die zweiten Keilelemente und die Führungselemente können aus Kunststoff hergestellt werden, so dass sich geringe Reibmomente und reduzierte Betätigungskräfte während des Hubs ergeben. Auf diese Weise können die Vorzüge der bekannten Gleitschieber- und Keilschiebersysteme ohne Einschränkungen vereint werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Teil einer erfindungsgemäßen Schieberarmatur in einem Querschnitt;
- **Figur 2**: einen Teil der in Figur 1 gezeigten Schieberarmatur in einem Längschnitt;
- **Figur 3**: eine Führung der Schieberarmatur in einer Perspektive und
- **Figur 4**: die Führung der Schieberarmatur in einer Explosionsdarstellung.

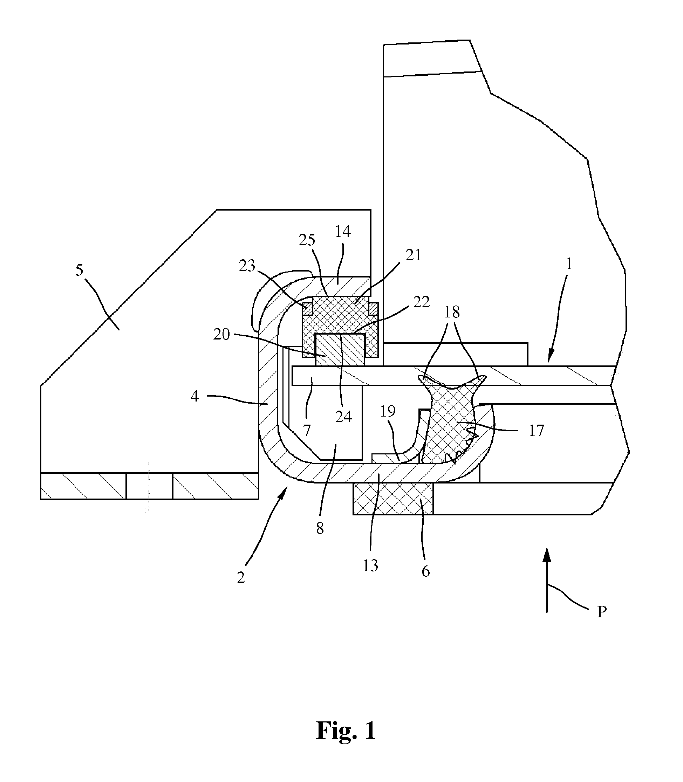

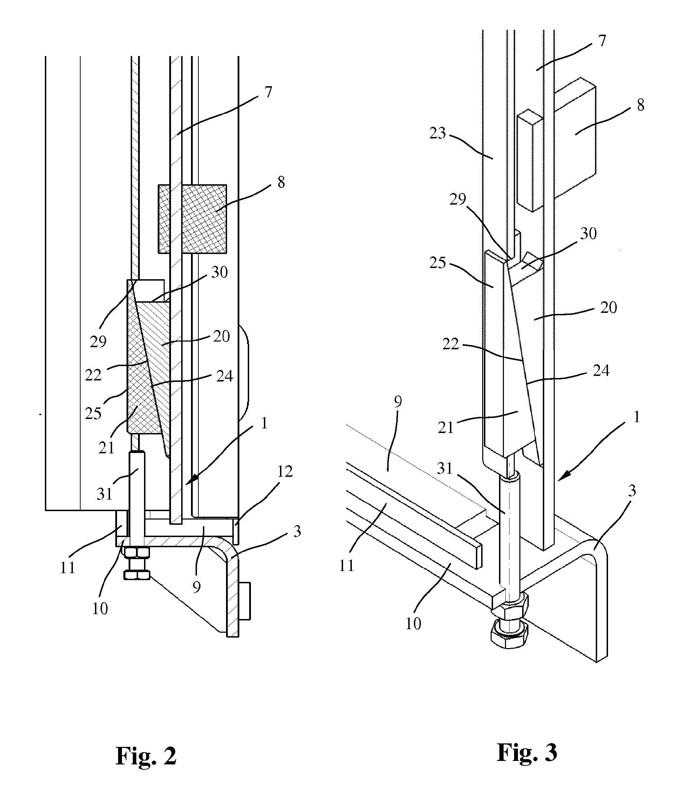

In Figur 1 ist ein Teil einer Schieberarmatur gezeigt, die z.B. zur Absperrung von Abwasser in Becken verwendet werden kann. Die Schieberarmatur enthält eine rechteckig, quadratisch oder rund ausgefiihrte Schieberplatte 1, die innerhalb einer hier als Rahmen ausgeführten Aufnahme 2 verschiebbar angeordnet ist. Bei der gezeigten Ausführung umfasst die rahmenförmige Aufnahme 2 ein in den Figuren 2 bis 4 gezeigtes unteres Abschlussprofil 3 und zwei in Figur 1 erkennbare parallele Seitenprofile 4, in denen die Schieberplatte 1 seitlich gefiihrt ist. Die rahmenförmige Aufnahme 2 mit dem waagrechten unteren Abschlussprofil 3 und den mit Haltestücken 5 versehenen senkrechten Seitenprofilen 4 kann z.B. über eine Dichtung 6 abgedichtet an der Außenseite einer mit einem Durchlass versehenen Wand eines Beckens oder dgl. befestigt werden. Auf die Schieberplatte 1 wirkt dann der Wasserdruck in Richtung des in Figur 1 gezeigten Pfeils P ein. Die Schieberplatte 1 kann aber auch als Schütz in einer entsprechenden Aufnahme eines Kanals bzw. einer Rinne oder in einer geeigneten Führung eines Gehäuses verschiebbar angeordnet sein.

Bei der gezeigten gehäusefreien Ausführung ist die Schieberplatte 1 an ihren beiden Längsseiten 7 über Führungselemente 8 in den beiden zueinander parallelen Seitenprofilen 4 der als Rahmen ausgeführten Aufnahme 2 verschiebbar geführt und steht in einer unteren Schließstellung auf einer auf dem unteren Abschlussprofil 3 angeordneten Sohlendichtung 9 auf. Die in den Figuren 2 und 3 gezeigte Sohlendichtung 9 ist auf einem oberen Schenkel 10 des als Winkelprofil ausgeführten unteren Abschlussprofils 3 zwischen einer vorderen und hinteren Halteleiste 11 bzw. 12 angeordnet. Über einen an sich bekannten und daher nicht dargestellten Spindelantrieb kann die Schieberplatte 1 aus der in den Figuren 2 und 3 gezeigten unteren Schließstellung nach oben in eine Öffnungsstellung zu Freigabe eines Durchlasses verschoben werden.

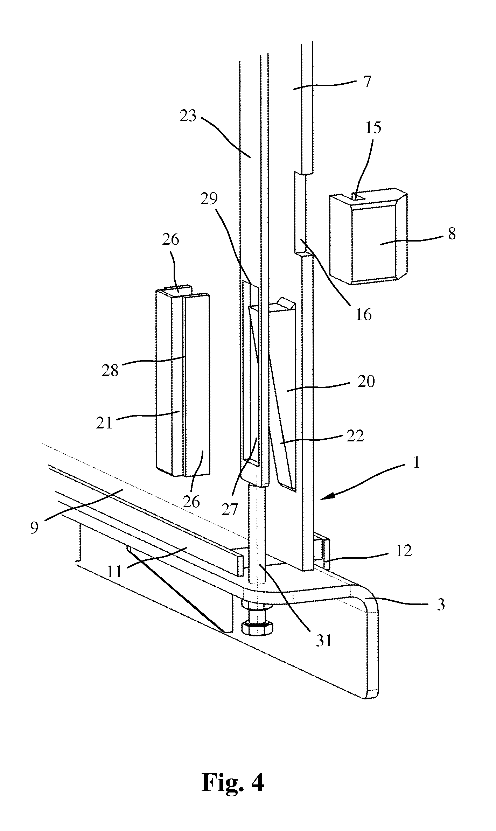

Die Seitenprofile 4 sind gemäß Figur 1 als offene Rahmenprofile mit einem inneren Schenkel 13 und einem äußeren Schenkel 14 ausgeführt. Zwischen dem inneren Schenkel 13 und dem äußeren Schenkel 14 der beiden Seitenprofile 4 ist die Schieberplatte 1 über die auch in den Figuren 2 bis 3 dargestellten Führungselemente 8 verschiebbar geführt. Die vorzugsweise aus Kunststoff bestehenden Führungselemente 8 können gemäß Figur 4 über einem Schlitz 15 auf die Längsseiten 7 der Schieberplatte 1 aufgesteckt und innerhalb einer Ausnehmung 16 gehalten sein.

Innerhalb der Seitenprofile 4 ist eine in Figur 1 dargestellte Dichtung 17 angeordnet, die an der Schieberplatte 2 anliegende Dichtlippen 18 enthält. Bei der gezeigten Ausführung liegt die Dichtung 17 an dem inneren Schenkel 13 des Seitenprofils 4 an und wird durch einen an die Innenseite des inneren Schenkels 13 angeschweißten Haltesteg 19 gehalten. Innerhalb der Seitenprofile 4 ist ferner eine Keilanordnung mit mehreren an den beiden Längsseiten 7 der Schieberplatte 1 in deren Verschiebrichtung in Linie hintereinander angeordneten ersten Keilelementen 20 und mit diesen in Eingriff stehenden zweiten Keilelementen 21 angeordnet. Die vorzugsweise aus Metall bestehenden und mit der Schieberplatte 2 verschweißten ersten Keilelemente 20 weisen eine den zweiten Keilelementen 21 zugewandte erste Keilfläche 22 auf. Die zweiten Keilelemente 21 sind an einer verschiebbaren Gleitschiene 23 angeordnet. Sie weisen an der zum ersten Keilelement 20 weisenden Seite eine zu der ersten Keilfläche 22 korrespondierende zweite Keilfläche 24 und auf der zur zweiten Keilfläche 24 gegenüberliegenden Seite eine gerade Anlagefläche 25 zur Anlage an der Innenseite des äußeren Schenkels 14 des Seitenprofils 4 auf.

Wie in Figur 4 erkennbar ist, haben die zweiten Keilelemente 21 eine quaderförmige Außenkontur mit hochgezogenen Seitenwänden 26. Zwischen den beiden Seitenwänden 26 der zweiten Keilelemente 21 sind die ersten Keilelemente 20 verschiebbar geführt. Die zweiten Keilelemente 21 sind in rechteckigen Ausnehmungen 27 der Gleitschiene 23 eingesetzt und weisen an den Außenseiten der beiden Seitenwände 26 jeweils eine Stufe 28 zur Halterung innerhalb der Ausnehmungen 27 auf. Entsprechend der ersten Keilelemente 20 sind auch die dazugehörigen zweiten Keilelemente 21 in Verschieberichtung der Schieberplatte 1 in Linie hintereinander und nicht zueinander seitlich versetzt angeordnet.

Aus den Figuren 2 und 3 geht hervor, dass die zweite Keilfläche 24 des in die Ausnehmung 27 der Gleitschiene 23 eingesetzten zweiten Keilelements 21 so verläuft, dass am Übergang zur Gleitschiene 23 am oberen Ende der Aussparung 27 eine Anschlagfläche 29 zur Mitnahme der Gleitschiene 23 durch die ersten Keilelemente 20 bei der Verschiebung der Schieberplatte 1 in die Öffnungsstellung entsteht. Die ersten und zweiten Keilelemente 20 bzw. 21 sind derart angeordnet, dass das durch den Wasserdruck an das zweite Keilelement 21 angedrückte erste Keilelement 20 bei der Verschiebung der Schieberplatte 1 in die Öffnungsrichtung mit der oberen Endfläche 30 zum Anschlag die Anschlagfläche 29 an der Ausnehmung 27 in der Gleitschiene gelangt. An dem unteren Abschlussprofil 3 sind verstellbare Anschläge 31 als unterer Anschlag für die beiden Gleitschienen 23 an den beiden Längsseiten 7 der Schieberplatte 1 angeordnet. Bei der gezeigten Ausführung sind die verstellbaren Anschläge als Stellschrauben mit Kontermutter ausgeführt.

Im Folgenden wird die Funktionsweise der erfindungsgemäßen Absperrarmatur anhand der Figuren 2 und 3 erläutert:
Wird die Schieberplatte 1 aus der in den Figuren 2 und 3 gezeigten Schließstellung nach oben bewegt, gleiten die an der Schieberplatte 1 befestigten ersten Keilelemente 20 mit deren Keilflächen 22 an den Keilflächen 24 der an der Gleitschiene angeordneten zweiten Keilelemente 21 entlang, bis die als Mitnahmeflächen wirkenden oberen Endflächen 30 der ersten Keilelemente 20 zur Anlage an den Anschlagflächen 29 der Gleitschienen 23 gelangen. Dabei wird die Verpressung zwischen der Schieberplatte 1 und der in Figur 1 gezeigten Dichtung 17 verringert. Bei einer weiteren Aufwärtsbewegung nehmen die ersten Keilelemente 20 die zweiten Keilelemente 21 über die Gleitschiene 23 für den restlichen Hub nach oben mit. Dabei wird die Schieberplatte 1 durch die vorzugsweise aus Kunststoff bestehenden quaderförmigen Führungselemente 8 und die vorzugsweise ebenfalls aus Kunststoff bestehenden zweiten Keilelemente 21 gleitend und nahezu spielfrei innerhalb der Seitenprofile 4 geführt.

Wird die Schieberplatte 1 dagegen aus einer oberen Offenstellung nach unten bewegt, werden die zweiten Keilelemente 21 über die ersten Keilelemente 20 mitgenommen, bis die Gleitschienen 23 kurz vor Erreichen der Schieberplatte 1 an der Sohlendichtung 9 mit ihren unteren Enden zur Anlage auf den als Stellschrauben ausgeführten Anschlägen 31 gelangen. Bei der weiteren Abwärtsbewegung der Schieberplatte 1 mit den angeschweißten ersten Keilelementen 20 bewegen sich diese auf den Keilflächen 24 der vorzugsweise ebenfalls aus Kunststoff bestehenden zweiten Keilelemente 21 weiter. Dabei wird die Schieberplatte 1 in Richtung der Dichtlippen 18 der Dichtung 17 gedrückt, wodurch die Dichtwirkung erhöht wird.

## Patentansprüche

1. Schieberarmatur mit einer innerhalb einer Aufnahme (2) verschiebbar angeordneten Schieberplatte (1), einer Dichtung (17) zur Abdichtung der Schieberplatte (1) gegenüber der Aufnahme (2) und einer Keilanordnung mit mehreren an der Schieberplatte (1) in deren Verschieberichtung voneinander beabstandet angeordneten ersten Keilelementen (20) und zu den ersten Keilelementen (20) gehörenden zweiten Keilelementen (21), durch welche die Schieberplatte (1) bei ihrer Verschiebung in eine Schließstellung quer zur Verschieberichtung der Schieberplatte (1) an die Dichtung (17) angedrückt wird, **dadurch gekennzeichnet, dass** die zweiten Keilelemente (21) relativ zu der Aufnahme (2) verschiebbar an der Aufnahme (2) abgestützt und die in Verschieberichtung der Schieberplatte (1) in Linie hintereinander angeordneten zweiten Keilelemente (21) an einer gemeinsamen Gleitschiene (23) angeordnet sind.

2. Schieberarmatur nach Anspruch 1, **dadurch gekennzeichnet, dass** die Aufnahme (2) in Form eines Rahmens mit zwei als Rahmenprofilen ausgeführten Seitenprofilen (4) zur Führung der Schieberplatte (1) an ihren beiden Längsseiten (7) ausgebildet ist.

3. Schieberarmatur nach Anspruch 1 oder 2, **dadurch gekennzeichnet, dass** die zweiten Keilelemente (21) in Aussparungen (27) der Gleitschiene (23) eingesetzt sind.

4. Schieberarmatur nach Anspruch 3, **dadurch gekennzeichnet, dass** die Gleitschiene (23) mindestens eine Anschlagfläche (29) zur Mitnahme der Gleitschiene (23) durch ein erstes Keilelement (20) bei der Verschiebung der Schieberplatte (1) in eine Offenstellung enthält.

5. Schieberarmatur nach Anspruch 4, **dadurch gekennzeichnet, dass** die Keilfläche (24) des zweiten Keilelements (21) so verläuft, dass am Übergang zur Gleitschiene (23) am oberen Ende der Aussparung (27) die Anschlagfläche (29) für eine obere Endfläche (30) des ersten Keilelements (20) entsteht.

6. Schieberarmatur nach einem der Ansprüche 1 bis 5, **dadurch gekennzeichnet, dass** die zweiten Keilelemente (21) hochgezogene Seitenwände (26) enthalten.

7. Schieberarmatur nach einem der Ansprüche 2 bis 6, **dadurch gekennzeichnet, dass** die Schieberplatte (1) innerhalb der Seitenprofile (4) der Aufnahme (2) durch das zweite Keilelement (21) und ein an der Schieberplatte (1) angeordnetes Führungselement (8) verschiebbar geführt ist.

8. Schieberarmatur nach Anspruch 7, **dadurch gekennzeichnet, dass** das zweite Keilelement (21) eine Gleitfläche (25) zur Anlage an der Innenseite eines äußeren Schenkels (14) des Seitenprofils (4) enthält.

## Claims

1. Sliding gate valve having a sliding plate (1) arranged so as to be displaceable within a receptacle (2), a seal (17) for sealing the sliding plate (1) relative to the receptacle (2) and a wedge arrangement with a plurality of first wedge elements (20) disposed spaced apart from one another on the sliding plate (1) in the direction of displacement thereof, and second wedge elements (21) which are associated with the first wedge elements (20), which press the sliding plate (1) against the seal (17) transversely to the direction of displacement of the sliding plate (1) when it is displaced into a closed position, **characterised in that** the second wedge elements (21) are supported on the receptacle (2) so as to be displaceable relative to the receptacle (2) and the second wedge elements (21) arranged in line one behind another in the direction of displacement of the sliding plate (1) are arranged on a common guiding rail (23).

2. Sliding gate valve according to claim 1, **characterised in that** the receptacle (2) is embodied in the form of a frame with two side profiles (4) embodied as frame profiles for guidance of the sliding plate (1) on its two longitudinal sides (7).

3. Sliding gate valve according to claim 1 or 2, **characterised in that** the second wedge elements (21) are inserted into openings (27) in the guiding rail (23).

4. Sliding gate valve according to claim 3, **characterised in that** the guiding rail (23) comprises at least one stop face (29) for entrainment of the guiding rail (23) by a first wedge element (20) when the sliding plate (1) is displaced into an open position.

5. Sliding gate valve according to claim 4, **characterised in that** the wedge face (24) of the second wedge element (21) is disposed so that the stop face (29) for an upper end face (30) of the first wedge element (20) is produced at the junction with the guiding rail (23) at the upper end of the opening (27).

6. Sliding gate valve according to one of claims 1 to 5, **characterised in that** the second wedge elements (21) comprise raised side walls (26).

7. Sliding gate valve according to one of claims 2 to 6, **characterised in that** the sliding plate (1) is guided so as to be displaceable within the side profiles (4) of the receptacle (2) by the second wedge element (21) and a guide element (8) arranged on the sliding plate (1).

8. Sliding gate valve according to claim 7, **characterised in that** the second wedge element (21) comprises a sliding face (25) for bearing on the inside of an outer limb (14) of the side profile (4).

## Revendications

1. Armature coulissante avec une plaque coulissante (1) agencée de manière mobile dans un logement (2), une garniture (17) pour rendre étanche la plaque coulissante (1) par rapport au logement (2) et un agencement à coin avec plusieurs premiers éléments de coin (20) agencés sur la plaque coulissante (1) à distance les uns des autres dans son sens de coulissement et des seconds éléments de coin (21) appartenant aux premiers éléments de coin (20), par lesquels la plaque coulissante (1) est pressée lors de son coulissement dans une position de fermeture transversalement au sens de coulissement de la plaque coulissante (1) contre la garniture (17), **caractérisée en ce que** les seconds éléments de coin (21) sont en appui par rapport au logement (2) de manière coulissante sur le logement (2) et les seconds éléments de coin (21) agencés dans le sens de coulissement de la plaque coulissante (1) en ligne les uns derrière les autres sont agencés sur un rail glissant commun (23).

2. Armature coulissante selon la revendication 1, **caractérisée en ce que** le logement (2) est réalisé sous la forme d'un cadre avec deux profilés latéraux (4) réalisés comme profilés de cadre pour le guidage de la plaque coulissante (1) sur ses deux côtés longitudinaux (7).

3. Armature coulissante selon la revendication 1 ou 2, **caractérisée en ce que** les seconds éléments de coin (21) sont insérés dans des évidements (27) du rail glissant (23).

4. Armature coulissante selon la revendication 3, **caractérisée en ce que** le rail glissant (23) contient au moins une surface de butée (29) pour l'entraînement du rail glissant (23) par un premier élément de coin (20) lors du coulissement de la plaque coulissante (1) dans une position ouverte.

5. Armature coulissante selon la revendication 4, **caractérisée en ce que** la surface de coin (24) du second élément de coin (21) s'étend de manière à ce que la surface de butée (29) pour une surface d'extrémité supérieure (30) du premier élément de coin (20) apparaisse sur le passage du rail glissant (23) sur l'extrémité supérieure de l'évidement (27).

6. Armature coulissante selon l'une quelconque des revendications 1 à 5, **caractérisée en ce que** les seconds éléments de coin (21) contiennent des parois latérales remontées (26).

7. Armature coulissante selon l'une quelconque des revendications 2 à 6, **caractérisée en ce que** la plaque coulissante (1) est guidée de manière coulissante dans le profilé latéral (4) du logement (2) par le second élément de coin (21) et un élément de guidage (8) agencé sur la plaque coulissante (1).

8. Armature coulissante selon la revendication 7, **caractérisée en ce que** le second élément de coin (21) contient une surface glissante (25) pour l'appui contre le côté intérieur d'une branche extérieure (14) du profilé latéral (4).
